# EUROPEAN PATENT APPLICATION

(11) **EP 2 889 802 A1**
(43) Date of publication of application: **01.07.2015**
(21) Application number: 13306868.4
(22) Date of filing: 26.12.2013
(51) Int. Cl.: G06F 21/83, G06F 21/31, G06F 21/84

(54) **Method of securing an authentication**

(71) Applicant: Gemalto SA, 92190 Meudon (FR)
(72) Inventor: Viola, Francesco, 92190 Meudon (FR)
(74) Representative: Lotaut, Yacine Diaw

(57) **Abstract**

An embodiment of the invention relates to a method of securing an authentication (100), said method (100) comprising the following steps:
- entering (103) a character string (7) into a data input device (6) of a user terminal (1),
- superposing (104) a graphic pattern (8) onto said character string (7) so that to obfuscate the character string 7 entered.

## Description

### TECHNICAL FIELD

The present invention pertains to a method of securing an authentication, for example in the field of mobile banking on credentials requests.

### BACKGROUND

The field of "Mobile Banking" is a generic term that is widely used to indicate a set of services (by instance, MNO, SPs) allowing the user to perform financial transactions from a mobile device.

More particularly, the user might access to those services via an application running on his mobile device, said application providing a user interface. In order to access to his user interface, the user must enter a private character string, such as a username, a password and/or a PIN code.

Unfortunately, attackers try to steal those private character strings in order to accessing sensitive data or perform sensitive actions. If specific protections are not available on the mobile device, attackers can access to those private character strings by several ways, for example by exploiting security weakness of the mobile device, by social engineering technics or by phishing.

A known method consist of emulating a service on a mobile device screen so that a user enters his personal character string. Then, when the user enters his personal character string in the emulated services, the attacker steals information.

Moreover, it could be noted that the private character strings can be complex. Therefore, the user can decide to deactivate the hiding of private character strings (i.e. symbols used in substitution of the real characters). In this case, a third person can look the character string when the user inputs those information.

In other term, the username, password or PIN code used can be stolen by a third party.

### SUMMARY

Accordingly, the purpose of the present invention is to propose a method of securing an authentication providing a high security, a little load for the user at the time of authentication, and where the danger of a password can be guessed by a third person is low even when an input value is looked by the third person at the time of authentication.

To achieve these advantages, and in accordance with the purpose of the invention as embodied, in a not limited embodiment, the present invention provides a method of securing an authentication, the method comprising the following steps:
- entering a character string into a data input device of a user terminal,
- superposing a graphic pattern onto the character string.

It could be noted that in a not limited meaning, "character string" means PIN code, password, username, credentials information, etc....

Thanks to the superposition of the graphic pattern onto the character string, the character string entered by a user is masked without making it invisible. For example, entering username and/or credentials information requires few seconds. A third person cannot guess the character of the character string because the graphic pattern masks partially the character string entered. Even the username, which is normally visible, can be masked by the graphic pattern.

Furthermore, it could be noted that it is easier to remember an unsophisticated character string than a complex character string. Therefore, thanks to the invention it is possible to use an unsophisticated character string by leveraging on the graphic pattern.

Besides, the graphic pattern allows protecting user against attacks like phishing or social engineering.

In addition to the main features aforementioned in the previous paragraph, the method of securing authentication according to the invention may also have one or more of the additional features below, taken individually or in any technically feasible combination.

In a not limited embodiment, the step of entering and the step of superposing are performed simultaneously.

In a not limited embodiment, the graphic pattern superposed onto the character string generates:
- Optical effects,
- Holographic effects,
- Images,
- Colors filtering,
- Shape distortions, or any combination thereof.

In a not limited embodiment, the method comprising a step of defining a graphic pattern.

In a not limited embodiment, the method comprising a step of storing the defined graphic pattern.

In a not limited embodiment, the defined graphic pattern is stored in the user terminal.

In a not limited embodiment, the defined graphic pattern is stored in a server.

### BRIEF DESCRIPTION

Other characteristics and advantages of the present invention will become apparent upon reading the following description of embodiments, which are naturally given by way of non-limiting examples, and in the attached drawing, in which:
- Figure 1 depicts a synoptic of the steps of a method of securing authentication according to the invention,
- Figure 2 is a schematic view showing a first embodiment of a user terminal implementing a method of securing authentication according to the invention,
- Figure 3A illustrates a first not limited example of a graphic pattern performed by the method of securing authentication according to the invention,
- Figure 3B illustrates a second not limited example of a graphic pattern performed by the method of securing authentication according to the invention.

The same references are used in different figures to designate same elements.

### DETAILED DESCRIPTION

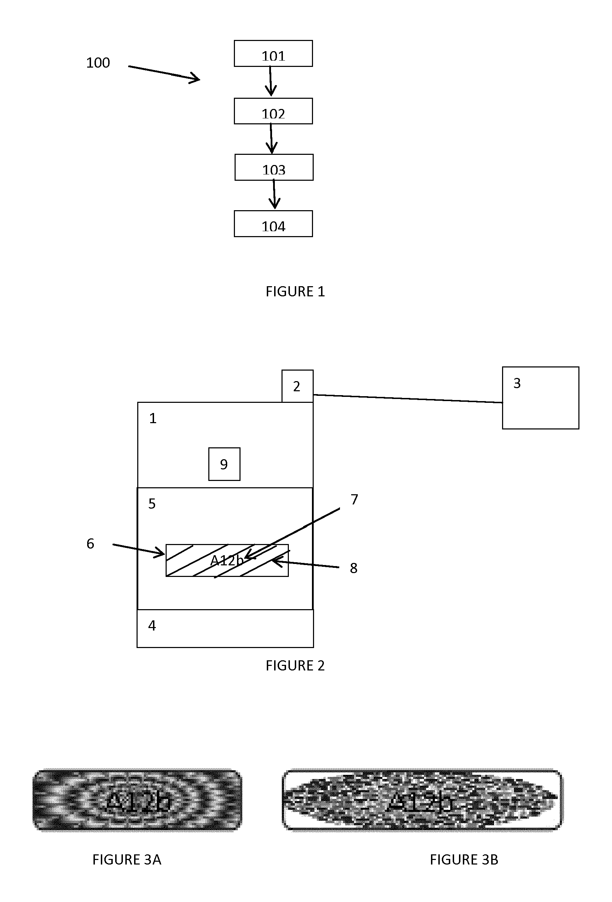

Figure 1 depicts a not limited embodiment of a method 100 of securing authentication according to the invention. Figure 2 illustrates a user terminal 1 implementing the method 100 of securing authentication illustrated in figure 1.

In a not limited embodiment, the user terminal 1 can be, for example, a smartphone or a cellular phone.

In a not limited embodiment, the user terminal 1 comprises an antenna 2 allowing to a user to access a World Wide Web and or a server 3 from the user terminal 1.

Furthermore, the user terminal 1 comprises a keyboard 4 allowing the user to enter a character string, for example a password, in order to enter in his bank account and a screen 5 displaying a data input device 6 allowing the user to see his password 7.

In a not limited embodiment, the method of securing authentication 100 comprises a step of defining 101 a graphic pattern.

The graphic pattern can be defined by selecting a graphic pattern from a plurality of graphic patterns proposed by an application running on the user terminal 1.

The user is able to choose and/or customize the graphic pattern to make it unique or to make her/him comfortable with the graphic pattern used.

Then, during a step of storing 102 the defined graphic pattern, this defined graphic pattern is stored in a memory (not illustrated) of the user terminal 1 and/or in a memory (not illustrated) of the server 3 having a secured communication with the user terminal 1. In a preferred embodiment, the defined graphic pattern is stored in a secure element and can be later retrieved.

Furthermore, the method 100 comprises a step of entering 103 a character string 7 into the data input device 6 of the user terminal 1. In a not limited example, the user realized the step of entering 103 the character string 7 via the keyboard 4. More particularly, the user enters the character string 7 corresponding for instance to a password, and in this example this password is "A12b".

Simultaneously to the step of entering 103, the method 100 comprises a step of superposing 104 a graphic pattern 8 onto the entered character string 7. Therefore, when the user enters his character string 7 into the data input device 6, the entered character string 7 is difficult to read.

It could be noted that the user terminal 1 comprises also a central processing unit 9 arranged and construed to perform various kinds of operations, such as exchanging data and realizing the step of superposing 104 the graphic pattern onto the character string (for example, the password A12b).

Therefore, in this not limited example, the central processing unit 9 retrieves the graphic pattern defined by the user during the step of defining 101 and superposes the graphic pattern previously defined onto the character string entered by the user.

It could be noted that the step of entering 103 a character string 7 into a data input device 6 of a user terminal 1 and the step of superposing 104 a graphic pattern 8 onto the character string 7 are realized simultaneously. Those two steps form two overlapped layers of authentication. During those steps 103 and 104, the character string 7 is partially masked but it remains visible.

More particularly, the step of entering 103 consists, for example, to enter the classical string or set of strings (for example: PIN, password, username, etc...).

The graphic pattern superposed during the step of superposing 104 overlaps or obfuscates the character string 7 entered during the step of entering 103. Both steps 103 and 104 coexist, are simultaneous, and are visible on the same data input device 6 displayed by the screen 5.

The graphic pattern 8 applied to the character string 7 can be based on many different technics and algorithms.

Figures 3A and 3B illustrate a first and a second example of graphic patterns 8 superposed to the character string 7.

It could be noted that a third person will have more difficulties to trick the user. Indeed, a third person will need to know what is exactly the graphic pattern used by each user or a targeted user (each user will have her/his own pattern) in order to emulate the MNO/SP application.

In a not limited embodiment, the graphic pattern added to the character string generates:
- optics effects,
- holographic effects,
- images,
- colors filtering (e.g. daltonism tests),
- shape distortions, or any combination thereof.

Naturally, the present invention is not limited to the described embodiments, but rather is subject to many variants accessible to the person skilled in the art without departing from the invention. In particular, without departing from the invention, it is possible to conceive graphic pattern superposed to a character string of different kind and natures.

## Claims

1. Method of securing an authentication (100), said method (100) comprising the following steps:
- entering (103) a character string (7) into a data input device (6) of a user terminal (1),
- simultaneously, superposing (104) a graphic pattern (8) onto said entered character string (7) so that to obfuscate the character string 7 entered.

2. Method of securing authentication (100) according to the preceding claim 1, wherein the step of entering (103) and the step of superposing (104) are performed simultaneously.

3. Method of securing authentication (100) according to any of the preceding claims, wherein the graphic pattern (8) superposed onto the character string (7) generates :
- Optical effects,
- Holographic effects,
- Images,
- Colors filtering,
- Shape distortions, or any combination thereof.

4. Method of securing authentication (100) according to any of the preceding claims, said method (100) comprising a step of defining (101) a graphic pattern (8).

5. Method of securing authentication (100) according to the preceding claim 4, said method (100) comprising a step of storing (102) the defined graphic pattern (8).

6. Method of securing authentication (100) according to the preceding claim 5, wherein the defined graphic pattern (8) is stored in the user terminal (1).

7. Method of securing authentication (100) according to claim 5, wherein the defined graphic pattern (8) is stored in a server (3).
